# EUROPÄISCHE PATENTSCHRIFT

(11) **EP 3 106 043 B1**
(45) Veröffentlichungstag und Bekanntmachung des Hinweises auf die Patenterteilung: **08.05.2019**
(21) Anmeldenummer: 16169910.3
(22) Anmeldetag: 17.05.2016
(51) Int. Cl.: A24C 5/32, A24C 5/33

(54) **VORRICHTUNG ZUM FÖRDERN, PRÜFEN UND/ODER BEARBEITEN EINES STABFÖRMIGEN ARTIKELS DER TABAK VERARBEITENDEN INDUSTRIE**
DEVICE FOR CONVEYING, EXAMINING AND/OR PROCESSING A ROD-SHAPED ARTICLE IN THE TOBACCO INDUSTRY
DISPOSITIF DESTINÉ À ACHEMINER, VÉRIFIER ET/OU TRAITER UN ARTICLE EN FORME DE TIGE DE L'INDUSTRIE DE TRAITEMENT DE TABAC

(30) Priorität: 26.05.2015 DE 102015108241
(43) Veröffentlichungstag der Anmeldung: 21.12.2016
(73) Patentinhaber: Hauni Maschinenbau GmbH, 21033 Hamburg (DE)
(72) Erfinder: Gögel, Patrick, 21075 Hamburg (DE); Heikens, Ralf, 21039 Börnsen (DE); Knepper, Thorsten, 21493 Schwarzenbek (DE); Hansen, Volker, 22453 Hamburg (DE); Folger, Manfred, 21035 Hamburg (DE); Kleine Wächter, Michael, 23881 Lankau (DE)
(74) Vertreter: Müller Verweyen

(56) Entgegenhaltungen:
- WO-A1-2010/062201
- DE-A1- 1 782 864
- DE-A1- 19 920 760
- DE-A1-102011 113 336
- DE-B4- 10 349 967
- US-A1- 2009 322 158
- US-A1- 2010 066 340

## Beschreibung

Die vorliegende Erfindung betrifft eine Wendevorrichtung, insbesondere eine Wendetrommel, zum Wenden eines stabförmigen Artikels der Tabak verarbeitenden Industrie, insbesondere in einem Filteransetzer, umfassend einen rotierend antreibbaren Grundkörper und mindestens einen an dem rotierbaren Grundkörper angeordneten, mittels eines Elektromotors angetriebenen Drehteller.

Der elektrische Antrieb von Trommelbaugruppen mit mitlaufenden zusätzlichen Antrieben, sogenannten Satelliten, auf der Trommel ist recht komplex.

Aus der DE 199 20 760 A1 ist eine Wendevorrichtung zum Wenden von Zigaretten bekannt, wie sie in einer Filteransatzmaschine verwendet wird. Bei bekannten Zigarettenproduktionsmaschinen ist die Drehung jeder zweiten Zigarette notwendig, damit die Zigaretten gleich ausgerichtet verpackt werden können, so dass die Mundstücke alle jeweils zur Öffnung einer Zigarettenschachtel orientiert sind. Dazu weist die Wendevorrichtung eine rotierende Wendetrommel auf, auf der Wendesegmente in Form von Drehtellern zur Drehung der Zigaretten vorgesehen sind. Diese Wendesegmente sind über eine Welle angetrieben, welche drehfest mit einem Zahnrad verbunden ist und über dieses Zahnrad angetrieben wird. Dazu ist ein Getriebe notwendig, was die Konstruktion auf der einen Seite verteuert, und auf der anderen Seite eine Schmierung erfordert. Um zu verhindern, dass austretendes Schmiermittel die stabförmigen Artikel verschmutzt und unbrauchbar macht, ist ein hoher konstruktiver Aufwand zur Abdichtung und Abführung des Schmiermittels notwendig. Zudem kann an dem Getriebe ein Getriebespiel auftreten, was zu einer Funktionsbeeinträchtigung bis hin zum Ausfall führen kann.

Eine Wendevorrichtung zum Wenden von in einer Reihe kontinuierlich angelieferten Zigaretten ist aus der DE 1 782 864 A1 bekannt. Die Wendevorrichtung umfasst eine vorteilhaft als Trommel ausgebildete Fördereinrichtung und einen mit pneumatischen Greifelementen ausgestatteten trommelartigen Ausrichtkopf, welcher die Zigaretten aufnimmt, wendet und auf einer Ablage ablegt. Der Ausrichtkopf rotiert um seine Querachse und jedes der Greifelemente ist derart angeordnet, dass es um eine eigene radiale Achse des Ausrichtkopfes rotiert und eine Drehung um 180 ° für jede volle Umdrehung des Ausrichtkopfes ausführt. Das zugrunde liegende mechanische Getriebe treibt den Ausrichtkopf und die Greifelemente an und verbindet die pneumatischen Greifelemente mit einer Unterdruckquelle. Alternativ zu dem Antrieb über ein mechanisches Getriebe ist ein elektrischer Antrieb über eine Schleifring/Bürsten-Kombination zur Stromversorgung des elektrischen Verbrauchers denkbar. Die DE 103 49 967 B4 offenbart beispielsweise eine Fördervorrichtung zum Fördern eines stabförmigen Artikels der Tabak verarbeitenden Industrie, umfassend einen rotierend antreibbaren Grundkörper und mindestens einen an dem rotierbaren Grundkörper angeordneten elektrischen Verbraucher. Die Fördervorrichtung weist einen elektrischen Antrieb mit einer Schleifringeinrichtung zur Versorgung mit elektrischem Strom auf. Diese hat jedoch den Nachteil, dass die Bürsten einem Verschleiß unterliegen und ein Auswechseln der Bürsten nur bei einem Maschinenstillstand möglich ist, was die verfügbare Einsatzzeit der Vorrichtung durch Wartungszeiten für einen solchen Bürstenwechsel reduziert.

US 2010/006340 A1 offenbart eine Vorrichtung zur kontaktfreien Leistungsübertragung für Computertomographen.

Aufgabe der Erfindung ist es, einen preisgünstigen und verschleißfreien Antrieb für eine Produktions- oder Prüfmaschine der Tabakverarbeitung bereitzustellen.

Die Aufgabe wird durch eine Wendevorrichtung gemäß Anspruch 1 gelöst.

Durch die kontaktfreie Stromversorgung kann auf einen verschleiß- und kontaktbehafteten Energieüberträger, beispielsweise eine Schleifring/Bürsten Kombination, oder auf einen mechanischen Antrieb mittels einer Getriebewelle verzichtet werden. Als kontaktfreie Stromversorgung ist dabei eine Stromversorgung anzusehen, welche berührungslos erfolgt. Durch die erfindungsgemäße Wendevorrichtung werden somit oben geschilderten Nachteile überwunden und es kann eine verschleißfreie Versorgung des elektrischen Verbrauchers erfolgen.

Unter kontaktfreier Stromversorgung ist in diesem Zusammenhang eine Leistungsübertragung von mindestens 100 mW, vorzugsweise mindestens 100 W, insbesondere im Bereich 1 KW zu verstehen. Der elektrische Verbraucher kann insbesondere ein Motor oder Sensor sein. Der Grundkörper ist beispielsweise ein Trommelmantel, insbesondere eine Funktionstrommel, beispielsweise eine Wendetrommel.

Vorzugsweise weist die Einrichtung zur kontaktfreien Stromversorgung ein ortsfestes Primärteil mit einer Primärwicklung und ein mit dem Grundkörper verbundenes Sekundärteil mit einer Sekundärwicklung auf. Eine induktive Stromversorgung ist eine einfache, kostengünstige und verschleißfreie Möglichkeit, die erforderlichen Leistungen kontaktfrei zu wenigstens einem elektrischen Verbraucher zu übertragen. Die Primärwicklung und die Sekundärwicklung sind bevorzugt als kreisringförmige Induktionsspulen ausgebildet, welche sich benachbart gegenüberstehen.

Bevorzugt ist dabei, wenn der Grundkörper einen Gleichrichter zum Gleichrichten des kontaktfrei übertragenen Versorgungsstroms aufweist. Auf diese Weise ist es möglich, dass die Stromübertragung von dem ortsfesten Teil der Wendevorrichtung zu dem Grundkörper verlustarm mittels Wechselstrom, insbesondere hochfrequentem Wechselstrom, erfolgt, wobei aufgrund des Gleichrichters an dem Grundkörper Gleichstrom zur Versorgung des Verbrauchers bereitsteht. Die Leitungsverluste und die damit verbundene Wärmeentwicklung können gegenüber Schleifringüberträgern durch den kontaktfrei übertragenen Wechselstrom verringert werden.

Gemäß einer weiteren vorteilhaften Weiterbildung ist vorgesehen, dass eine Einrichtung zur kontaktfreien Signalübertragung, insbesondere einer drahtlosen, berührungslosen Signalübertragung, zu oder von dem wenigstens einen Verbraucher vorgesehen ist. Um den elektrischen Verbraucher zu steuern und/oder zu regeln, ist es vorteilhaft, wenn zusätzlich zu der kontaktfreien Stromversorgung auch eine kontaktfreie Übertragung eines Signals erfolgen kann. Bei der Signalübertragung werden Leistungen deutlich unterhalb von 100 mW übertragen, wodurch Leistungsübertragung und Signalübertragung im Sinne der Erfindung voneinander abgrenzbar sind.

In einer Ausführungsform kann die Einrichtung zur kontaktfreien (englisch: wireless) Signalübertragung ein ortsfestes Primärteil, beispielsweise eine Primärwicklung, und ein mit dem Grundkörper verbundenes Sekundärteil, beispielsweise eine Sekundärwicklung, aufweisen. Gemäß einem zweiten Ausführungsbeispiel kann vorgesehen sein, dass die Einrichtung zur kontaktfreien Signalübertragung einen Kondensator mit einer ortsfesten Kondensatorelektrode und einer mit dem Grundkörper verbundenen Kondensatorelektrode umfasst. Dadurch ist eine kapazitive Übertragung von Signalen möglich. Kapazitiv, insbesondere mittels eines elektrischen Wechselfeldes, lässt sich prinzipiell auch elektrische Leistung übertragen.

Eine vorteilhafte Weiterbildung der Einrichtung zur kontaktfreien Signalübertragung zeichnet sich dadurch aus, dass die Signalübertragungseinrichtung zur kontaktfreien Signalübertragung eine Kondensatoreinheit mit zwei ortsfesten Kondensatorelektroden aufweist, welche kreisringförmig ausgebildet und konzentrisch zueinander angeordnet sind und zwei mit dem rotierbaren Grundkörper verbundenen Kondensatorelektroden aufweist, welche kreisringförmig ausgebildet und konzentrisch zueinander angeordnet sind. Die Kondensatoreinheit ist somit aus zwei konzentrisch zueinander angeordneten kreisringförmigen Kondensatoren gebildet, wobei die die zwei ortsfesten konzentrisch zueinander angeordneten Kondensatorelektroden und die zwei mit dem rotierbaren Grundkörper verbundenen konzentrisch zueinander angeordneten Kondensatorelektroden für einen Vollduplexbetrieb ausgebildet und eingerichtet sind, sodass Daten in beide Richtungen gleichzeitig übertragbar sind oder übertragen werden können.

Die Vorteile der erfindungsgemäßen Ausgestaltung der Kondensatoreinheit bestehen in niedriger Kosten, geringerer Wärmeentwicklung und einer erheblich höheren Datenübertragungsrate, als dies bei einer induktiven Signalübertragung gegeben ist. Die erfindungsgemäße kapazitive Signalübertragungseinrichtung ist für eine Datenübertragungsrate von bis zu 100 MHz vorgesehen. Mit der vorstehenden Datenübertragungstechnik können aber auch Datenraten bis 1,25 GHz erreicht werden.

In einer Abwandlung der Kondensatoreinheit mit zwei konzentrisch zueinander stationär angeordneten kreisringförmigen Kondensatorelektroden in einer ersten Ebene, und zwei rotierbare konzentrisch zueinander angeordneten Kondensatorelektroden in einer zweiten Ebene kann die Kondensatoreinheit auch derart aufgebaut sein, dass die vier Kondensatorelektroden in vier separaten Ebenen um eine gemeinsame Drehachse angeordnet sind.

Bevorzugt ist dabei, wenn die Einrichtung zur kontaktfreien Signalübertragung konzentrisch und radial innerhalb der Einrichtung zur kontaktfreien Stromversorgung angeordnet ist. Da die übertragbare Energie mit der Größe des Energieübertragungselements (beispielsweise Induktionswicklung oder Kondensatorelektrode) steigt, können so im äußeren Bereich der Wendevorrichtung größere Energieübertragungselemente zum Übertragen des Versorgungsstroms angeordnet werden, während konzentrisch zu diesen im radial inneren Bereich kleinere Energieübertragungselemente angeordnet werden können, mit denen die deutlich kleineren Leistungen der Signale übertragen werden. Diese Anordnung bietet zusätzlich den Vorteil, dass die Signalübertragung und die Versorgungsstrom-Übertragung durch ein gemeinsames Bauteil erfolgen können, welches die größeren und die kleineren Energieübertragungselemente umfasst.

Gemäß einer vorteilhaften Ausführungsform der Erfindung ist eine Einrichtung zur Frequenzmodulation und Frequenzdemodulation des kontaktfrei übertragenen Signals vorgesehen.

Eine weitere vorteilhafte Weiterbildung der Wendevorrichtung besteht darin, dass die Einrichtung zur kontaktfreien Stromversorgung einen Generator mit einem Rotor und einem Stator aufweist, wobei der Stator von dem rotierbaren Grundkörper gebildet wird oder an diesem gehalten ist. Der Rotor weist wenigstens vier Permanentmagnete auf und der Stator weist eine Mehrzahl von Wicklungen auf. Dadurch kann der rotierbare Grundkörper als Generator wirken.

Vorteilhaft ist, wenn der Drehantrieb des Stators unabhängig mit verschiedener Drehzahl von dem Rotationsantrieb des Rotors antreibbar ist. Dadurch wird erreicht, dass der elektrische Verbraucher auch bei Stillstand des Stators, beispielsweise bei Maschinenstillstand, mit Strom versorgt werden kann.

Gemäß einer vorteilhaften Ausführungsform ist vorgesehen, dass der mindestens eine elektrische Verbraucher ein Elektromotor für eine am rotierbaren Grundkörper angeordnete und relativ zu diesem bewegbare Komponente ist, wobei der Elektromotor insbesondere als Servomotor, Torquemotor oder Schrittmotor ausgebildet sein kann. Diese Komponente kann beispielsweise ein auf dem Trommelmantel angeordneter Drehteller, insbesondere zum Wenden oder Bearbeiten von stabförmigen Artikeln sein. Torquemotoren werden auch als Langsamläufer bezeichnet, welches aus der hohen Polzahl resultiert, und können besonders vorteilhaft als getriebefreie Direktantriebe eingesetzt werden.

Eine weitere vorteilhafte Weiterbildung besteht darin, dass ein Drehwinkelgeber zur Ermittlung einer Drehposition und/oder einer Drehgeschwindigkeit des Grundkörpers vorgesehen ist. Damit wird die Übergabe an den Grundkörper und/oder eine Prüfung oder Bearbeitung von stabförmigen Artikeln auf dem Grundkörper erleichtert, da die Übergabe-, Prüf- oder Bearbeitungswerkzeuge entsprechend sehr genau steuerbar sind.

Besonders vorteilhaft ist dabei, wenn an oder in dem Grundkörper eine elektronische Steuereinheit zum Steuern und/oder Regeln des mindestens einen elektrischen Verbrauchers vorgesehen ist. Dadurch erhöhen sich die Gestaltungsmöglichkeiten und es können auch Verbraucher versorgt werden, die eine Steuerung oder Regelung erfordern.

Erfindungsgemäß wird eine Wendevorrichtung zum Wenden eines stabförmigen Artikels der Tabak verarbeitenden Industrie vorgeschlagen, insbesondere in einem Filteransetzer, umfassend einen rotierend angetriebenen Grundkörper und mindestens einen an dem rotierenden Grundkörper angeordneten, mittels eines elektrischen Antriebs, insbesondere eines Servomotors, Torquemotors oder Schrittmotors, angetriebenen Drehteller, wobei eine Einrichtung zur kontaktfreien Stromversorgung des elektrischen Antriebs vorgesehen ist. Eine solche Wendevorrichtung ist verschleißminimiert und erfordert somit weniger Wartungs- und Instandhaltungsaufwand als die aus dem Stand der Technik bekannten Wendevorrichtungen.

Die Erfindung wird im Folgenden anhand bevorzugter Ausführungsformen unter Bezugnahme auf die beigefügten Figuren erläutert. Dabei zeigt
- Fig. 1: ein erstes Ausführungsbeispiel einer erfindungsgemäßen Wendevorrichtung zum Wenden eines stabförmigen Artikels der Tabak verarbeitenden Industrie;
- Fig. 2: ein weiteres Ausführungsbeispiel einer erfindungsgemäßen Wendevorrichtung
- Fig. 3: ein weiteres Ausführungsbeispiel einer erfindungsgemäßen Wendevorrichtung
- Fig. 4: eine Einrichtung zur kapazitiven Signalübertragung in einer der Vorrichtungen gemäß Fig. 2 oder Fig. 3;
- Fig. 5: eine Wendevorrichtung zum Wenden eines stabförmigen Artikels, und
- Fig. 6: eine schematische Darstellung einer weiteren Einrichtung zur kapazitiven Signalübertragung.

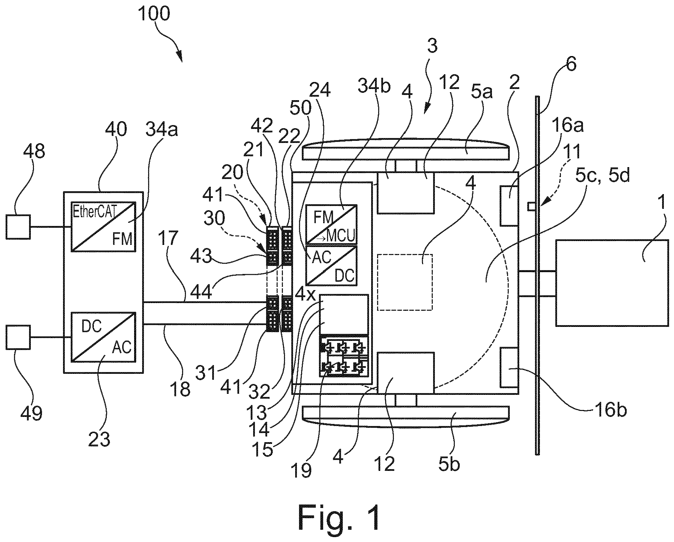

In Fig. 1 ist ein erstes Ausführungsbeispiel einer erfindungsgemäßen Wendevorrichtung 100 zum Wenden eines stabförmigen Artikels der Tabak verarbeitenden Industrie dargestellt. Die Wendevorrichtung 100 umfasst einen Grundkörper 2, welcher über einen Drehantrieb 1 rotierend angetrieben ist, sowie mindestens einen an oder in dem rotierenden Grundkörper 2 angeordneten elektrischen Verbraucher 4. Der Grundkörper 2 kann beispielsweise Teil einer Wendetrommel sein.

In Fig. 1 dargestellt ist ein rotierender Grundkörper 2 als Teil einer Wendetrommel 3. An dem Grundkörper 2 ist ein elektrischer Verbraucher 4 in Form eines Elektromotors 12 für einen Drehteller 5a, 5b, 5c, 5d angeordnet. An der Wendetrommel 3 ist mindestens ein, vorzugsweise eine Mehrzahl von beispielsweise zwei Indexsensoren 16, 16a, 16b bzw. Indexnehmern vorgesehen, welche mit einem Indexmittel 11, nämlich in Form einer Indexkennung, bzw. in Form eines Indexmagneten oder einer optischen Kennung mit dem Indexgeber in Wirkverbindung stehen, wobei das Indexmittel 11 an einem nicht mit der Wendetrommel 3 rotierenden, ortsfesten Gehäuseteil 6 der Maschine angeordnet ist.

Die Wendevorrichtung 100 umfasst des Weiteren eine Leistungsübertragungseinrichtung 20 zur kontaktfreien Stromversorgung des Drehantriebs 12 für die Drehteller 5a, 5b, 5c, 5d aus einer ortsfesten Stromquelle 49 und eine Steuereinheit 50, welche an oder in dem Grundkörper 2 angeordnet ist. Die Steuereinheit 50 weist im Ausführungsbeispiel vier Stromregler 13, vier Drehzahlregler 14 und vier Lageregler 15 auf. Somit ist je Drehteller 5a, 5b, 5c, 5d ein separater Regelkreis bildbar. Die Steuereinheit 50 umfasst ferner einen mit dem Grundkörper verbundenen Gleichrichter 24 zum Gleichrichten des kontaktfrei übertragenen Versorgungsstroms, der Teil der Leistungsübertragungseinrichtung 20 ist. Die Steuereinheit 50 weist ferner eine Modulationseinrichtung 34 zur Frequenzmodulation auf, mit der Datensignale frequenzmoduliert übermittelt werden können.

An einer Stirnseite des rotierbaren Grundkörpers 2 ist als Teil der Leistungsübertragungseinrichtung 20 ein Sekundärteil 22 vorgesehen, welches mit einem stationär anordneten Primärteil 21 in Wirkverbindung steht. Die Stromübertragung zwischen Primärteil 21 und Sekundärteil 22 erfolgt induktiv mittels Induktionswicklungen 41, 42 nach dem Transformatorprinzip, wobei die Frequenz des induktiven Wechselfeldes mindestens 10 kHz, vorzugsweise mindestens 20 kHz, insbesondere 50 kHz oder mehr beträgt. Die Induktionswicklungen 41, 42 sind kreisringförmig ausgebildet, wobei der Kreisringmittelpunkt mit der Drehachse des rotierbaren Grundkörpers 2 zusammenfällt.

Die Wendevorrichtung 100 umfasst eine Signalübertragungseinrichtung 30 zur kontaktfreien Signalübertragung, welcher eine ortsfeste Steuereinheit 40 vorgeordnet ist. Die Signalübertragungseinrichtung 30 ist vorzugsweise ebenfalls kreisringförmig und konzentrisch um die Drehachse des rotierbaren Grundkörpers 2 angeordnet. Im Ausführungsbeispiel gemäß Fig. 1 ist eine induktive Signalübertragung mittels einer ortsfesten Induktionswicklung 43 und einer an dem rotierbaren Grundkörper 2 angeordneten Induktionswicklung 44 vorgesehen. Die kreisförmig ausgebildeten Induktionswicklungen 43, 44 zur Signalübertragung sind bevorzugt in derselben vertikalen Ebene innerhalb der Induktionswicklungen 41, 42 zur Leistungsübertragung angeordnet.

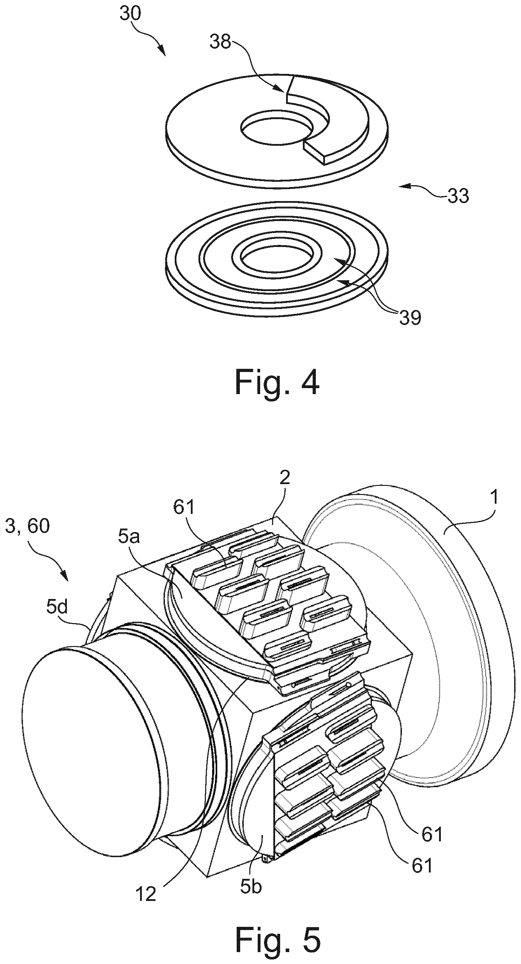

In einem weiteren bevorzugten Ausgestaltung ist vorgesehen, dass die Signalübertragungseinrichtung 30 zur Signalübertragung, wie in Fig. 4 dargestellt, kapazitiv arbeitet und mindestens einen, vorzugsweise zwei konzentrisch angeordnete Kondensatoren 33 umfasst. An einer ersten Platte des Kondensators 33 sind zwei Kondensatorelektroden 39 ausgebildet, welche mit entsprechenden nicht gezeigten Kondensatorelektroden 39 auf der zweiten Platte des Kondensators 33 zur Signalübertragung in Wirkverbindung stehen. Jeweils eine erste Kondensatorelektrode 39 und eine gegenüberliegende zweite nicht gezeigte Kondensatorelektrode 39 bilden somit einen Kondensator 33. Die Signalübertragungseinrichtung 30 kann des Weiteren eine Elektronikbaugruppe 38 zur Datenaufbereitung aufweisen.

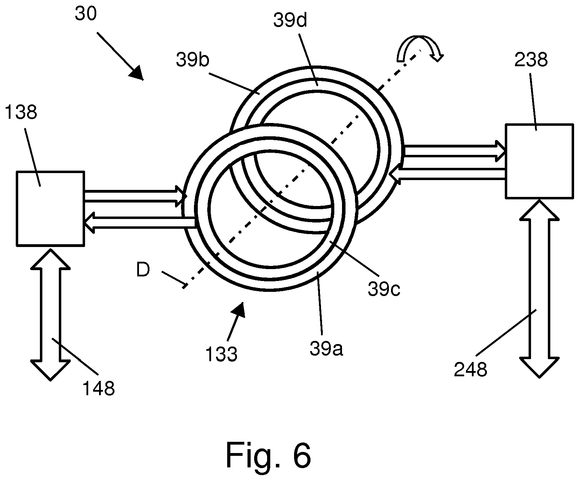

In einer besonders bevorzugten Weiterbildung ist die kapazitive Signalübertragungseinrichtung 30, wie in Fig. 6 dargestellt ausgebildet, wobei die Signalübertragungseinrichtung 30 zur kontaktfreien Signalübertragung eine Kondensatoreinheit 133 mit zwei ortsfesten Kondensatorelektroden 39a und 39c aufweist, welche kreisringförmig ausgebildet und konzentrisch zueinander angeordnet sind und zwei rotierbare Kondensatorelektroden 39b und 39d aufweist, welche ebenfalls kreisringförmig ausgebildet und konzentrisch zueinander angeordnet sind. Die Kondensatoreinheit ist somit aus zwei konzentrisch zueinander angeordneten kreisringförmigen Kondensatoren gebildet, wobei die zwei ortsfesten Kondensatorelektroden 39a und 39c und die zwei rotierbaren Kondensatorelektroden 39b und 39d für einen Vollduplexbetrieb ausgebildet und eingerichtet sind, sodass Daten in beide Richtungen gleichzeitig übertragbar sind oder übertragen werden können. Die erfindungsgemäße kapazitive Signalübertragungseinrichtung 30 ist im Ausführungsbeispiel für eine Datenübertragungsrate von 100 MHz vorgesehen. Die stationären Kondensatorelektroden 39a und 39c sind gemeinsam auf einer ersten Leiterplatte der Kondensatoreinheit 133 jeweils in Form einer kreisringförmigen Leiterbahn angeordnet, welche separat mit einer ersten Busanschaltbaugruppe 138 verbunden sind, die eingerichtet und ausgebildet ist, die HF-Signale in industriebusfähige Daten und umgekehrt zu wandeln und an einen Industriebus 148 bzw. von einem Industriebus 148, bevorzugt einen als EtherCAT-Bus ausgebildeten Industriebus 148, zu übertragen. Die um eine Drehachse D rotierbaren Kondensatorelektroden 39b und 39d sind gemeinsam auf einer zweiten Leiterplatte der Kondensatoreinheit jeweils in Form einer kreisringförmigen Leiterbahn angeordnet, welche separat mit einer zweiten Busanschaltbaugruppe 238 verbunden sind, die eingerichtet und ausgebildet ist, die HF-Signale in industriebusfähige Daten bzw. Industriebusdaten in HF-Signale zu wandeln und bidirektional an einen Industriebus 248 bzw. von einem Industriebus 248 zu übertragen, wobei die zweiten Busanschaltbaugruppe 238 Bestandteil des Rotors 26 oder des rotierbaren Grundkörpers 2 der Wendetrommel 3 ist.

Die Wendevorrichtung 100 umfasst ferner eine ortsfeste Steuereinheit 40, welche eine vorzugsweise bidirektionale Modulationseinrichtung 34a zur Frequenzmodulation und/oder Demodulation aufweist. Die Steuereinheit 40 ist ferner über eine Signalleitung mit der primärseitigen Induktionswicklung 43 der Signalübertragungseinrichtung 30 zur kontaktfreien Signalübertragung verbunden. Die sekundärseitige Induktionswicklung 44 ist wiederum mit einer vorzugsweise bidirektionalen Modulationseinrichtung 34b verbunden. Die ortsfeste Steuereinheit 40 kann vorzugsweise einen Wechselrichter 23 zum Wechselrichten des kontaktfrei zu übertragenden Versorgungsstroms aufweisen. Ein Ausgang des ortsfesten Wechselrichters 23 ist über eine Versorgungsleitung 18 mit dem Primärteil 21, welches eine Induktionswicklung 41 umfasst, der Leistungsübertragungseinrichtung 20 verbunden. Die Induktionswicklung 42 des Sekundärteils ist wiederum mit einem steuerbaren Wechselrichter 19 verbunden, welcher das jeweils erforderliche Drehzahlprofil für die Elektromotoren 12 steuert.

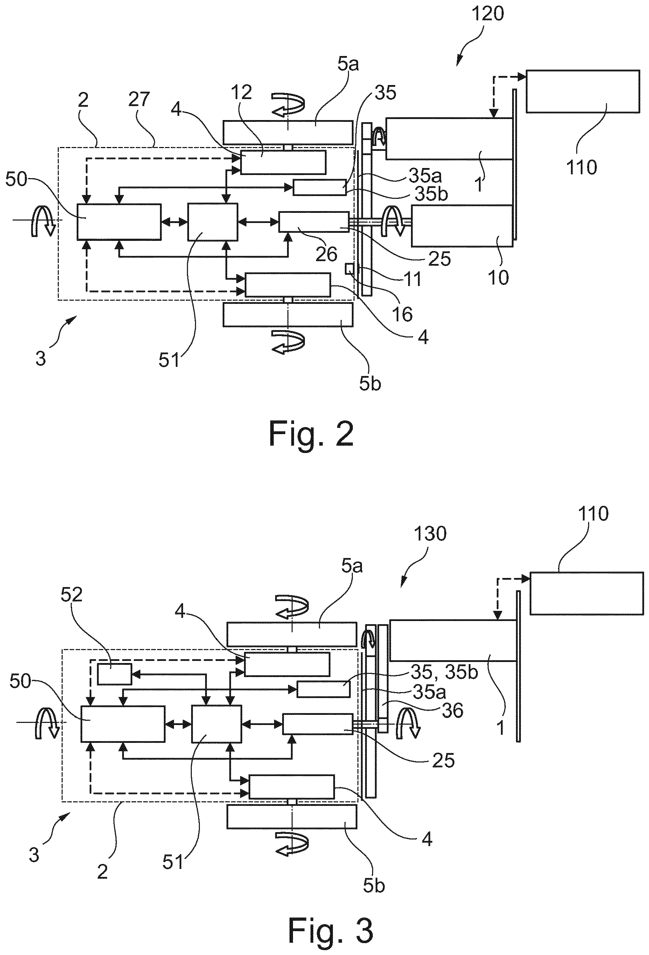

In Fig. 2 ist ein weiteres Ausführungsbeispiel einer erfindungsgemäßen Wendevorrichtung 120 zum Wenden eines stabförmigen Artikels der Tabak verarbeitenden Industrie dargestellt. Die Wendevorrichtung 120 umfasst einen rotierbaren Grundkörper 2, welcher von einem Drehantrieb 1 antreibbar ist. Der Drehantrieb 1 wird durch eine Steuer- und Regeleinheit 110 gesteuert und/oder geregelt. Der Grundkörper 2 ist als Wendetrommel 3 ausgeführt, wobei an oder in der Wendetrommel 3 elektrische Verbraucher 4 in Form von Elektromotoren 12 für die Drehteller 5a, 5b angeordnet sind. Die Drehteller 5a, 5b sind dabei satellitenförmig außen an der rotierbaren Wendetrommel 3 angeordnet und relativ zu dieser drehbar. Als Spannungsquelle und Stromversorgung ist dort ein bürstenloser Generator 25 innerhalb der Wendetrommel 3 vorgesehen.

Der Generator 25 weist einen Stator 27 auf, welcher durch den rotierbaren Grundkörper 2, insbesondere die Wendetrommel 3, gebildet oder an diesem befestigt ist. Der Generator 25 weist ferner einen Rotor 26 auf, welcher über einen elektrischer Rotorantrieb 10 innerhalb des Stators 27 drehbar angeordnet ist. Der Rotor 26 weist dabei Permanentmagnete zur Erzeugung von mindesten zwei, beispielsweise vier Permanentmagnetpolen auf, welche gleichmäßig über den Umfang des Rotors 26 verteilt sind. Der Stator 27 weist eine Mehrzahl von Spulen auf, so dass durch eine Rotation des Rotors 26 im Stator 27 ein Versorgungsstrom induziert wird und den mindestens einen elektrischen Verbraucher 4 an oder in dem rotierbaren Grundkörper 2 mit einem Strom versorgt.

Der Stator 27 ist vorzugsweise am rotierbaren Grundkörper 2 gehalten und somit gegenüber dem Rotor 26 drehbar antreibbar, so dass der Stator 27 und der Rotor 26 mit unterschiedlichen Drehzahlen rotierbar sind. Insbesondere ist eine Drehbewegung des Stators 27 bei Stillstand des Rotors 26 und/oder eine Drehbewegung des Rotors 26 bei Stillstand des Stators 27 vorgesehen.

Dabei wird durch vorteilhaft unabhängige Antriebe für den rotierbaren Grundkörper 2 und den Generator 25 erreicht, dass der Drehantrieb 1 des Stators 27 unabhängig von dem Rotorantrieb 10 ist. Die Vorrichtung 100, 120, 130 weist einen Drehwinkelgeber 35 auf, welcher beispielsweise als hochauflösender Absolutwertgeber oder Inkrementalgeber, jeweils auf einem optischen oder magnetischen Prinzip basierend ausgebildet sein kann. An dem rotierbaren Grundkörper 2 ist bevorzugt ein Indexsensor 16 vorgesehen, welcher in Wirkverbindung mit einem Indexmittel 11 steht, welches ortsfest angeordnet ist, so dass über den Indexsensor 16 und das Indexmittel 11 die Drehzahl, die Drehgeschwindigkeit und/oder definierte Winkelpositionen des rotierbaren Grundkörpers 2 ermittelbar sind. An dem rotierbaren Grundkörper 2 ist eine zentrale Steuereinheit 50 angeordnet, über welche die Drehzahl des Rotorantriebs 10, die Drehzahl der Elektromotoren 12 der Drehteller 5a, 5b und ggf. weitere Funktionen gesteuert und/oder geregelt werden können.

Die Energieumwandlung in der Wendetrommel 3 erfolgt mittels des Rotorantriebs 10. So ist es auch bei still stehender Wendetrommel 3 möglich, elektrische Antriebsleistung zu erzeugen und beispielsweise die Drehteller 5a, 5b positionsgenau auszurichten. Weiterhin ist es möglich, mit einer geringen Baugröße des Generators 25 auszukommen, da mit einer höheren Drehzahl des Rotationsantriebs 10 eine höhere Leistung generiert werden kann. Die Drehzahl des Rotationsantriebs 10 für den Generator 25 ist entsprechend der Leistungsanforderung der elektrischen Verbraucher 4 regelbar. Sie ist zudem abhängig von der Drehzahl des rotierbaren Grundkörpers 2. Die Regelung und/oder Steuerung des Rotorantriebs 10 kann bevorzugt berührungslos mittels geeigneter Bauelemente, insbesondere induktiv, kapazitiv oder optisch erfolgen. Eine optische Signalübertragung durch eine Hohlwelle des Rotorantriebs 10 für den Generator 25 ist als weitere Ausführungsform vorgesehen.

Der Drehantrieb 1 treibt beispielsweise über eine Verzahnung, eine Steuerkette oder einen Zahnriemen den rotierbaren Grundkörper 2 an. Ein Regler 51 innerhalb des rotierbaren Grundkörper 2 regelt die Elektromotoren 12 für die Drehteller 5a, 5b. Durch den Drehwinkelgeber 35 wird die Lage des rotierbaren Grundkörpers 2 an die Steuereinheit 50 übermittelt und dort gespeichert, so dass die Steuereinheit 50 weiß, in welcher Stellung sich der rotierbare Grundkörper 2 befindet. In Abhängigkeit der so ermittelten Position des rotierbaren Grundkörpers 2 kann die Steuereinheit 50 die Elektromotoren 12 autark, d.h. ohne zusätzliche Signalübertragung steuern.

Fig. 3 zeigt ein abgewandeltes Ausführungsbeispiel einer Vorrichtung 130 gegenüber der Wendevorrichtung 120 aus Fig. 2. Bei weitestgehend gleichem Aufbau wird im Folgenden nur auf die Unterschiede eingegangen. Anstelle eines separaten Rotorantriebs 10 für den Generator 25 wird der Generator 25 in dieser Ausführungsform durch ein Getriebe 36 angetrieben, welches in einer einfachen Ausführungsform die Antriebswellen von dem rotierbaren Grundkörper 2 und dem Generator 25 durch einen Zahnriemen oder eine Kette miteinander verbindet. Um eine Stromversorgung der elektrischen Verbraucher auch bei stehendem Grundkörper 2 zu ermöglichen, ist in oder an dem Grundkörper 2 ein Energiespeicher in Form eines Akkumulators 52 vorgesehen, welcher als Speicher für elektrische Energie dient und die Elektromotoren 12 der Drehteller 5a, 5b versorgt. Zusätzlich kann ein Regler 51 zwischen dem Ackumulator 52 und dem Generator 25 vorgesehen sein, welcher die Stromversorgung der elektrischen Verbraucher 4 über den Generator 25 oder den Akkumulator 52, sowie den Ladestrom von dem Generator 25 zu dem Akkumulator 52 regelt. Ferner ist an der Vorrichtung 130 ein Drehwinkelgeber 35 vorgesehen, über welchen sich eine exakte Position der Wendetrommel 3 ermitteln lässt. Dazu ist an der rotierbaren Wendetrommel 3 ein bewegbares Teil 35b des Drehwinkelgebers 35 angeordnet, welches mit einem ortsfesten Teil 35a des Drehwinkelgebers 35 in Wirkverbindung steht.

Der Generator 25 ist für eine bestimmte Drehzahl, bei der die Nennleistung erbracht werden soll, zweckmäßig ausgelegt, welche vorzugsweise um wenigstens Faktor 2 höher ist als die Nenndrehzahl des rotierbaren Grundkörpers 2. Bei einem Stillstand des Grundkörpers 2 folgt, dass bei einer starren Koppelung über ein Getriebe keine Leistung erzeugt und übertragen wird. Für den Stillstand ist es daher zweckmäßig, eine temporäre zusätzliche Versorgung vorzusehen. Dazu ist ein Akkumulator 52 in der Wendetrommel 3 vorgesehen, welcher auch bei Drehzahlen unterhalb der Nenndrehzahl, insbesondere zum Anfahren der Vorrichtung 130, die Stromversorgung des elektrischen Verbrauchers 4 aufrechterhält.

In Fig. 5 ist eine Wendevorrichtung 60 zum Wenden eines stabförmigen Artikels oder einer Gruppe von stabförmigen Artikeln der Tabak verarbeitenden Industrie, beispielsweise von Zigaretten, dargestellt, wie sie beispielsweise in einer Filteransetzmaschine Verwendung finden kann. Die Wendevorrichtung 60 umfasst einen rotierend antreibbaren Grundkörper 2 in Form einer Wendetrommel 3 und mehrere an dem rotierbaren Grundkörper 2 angeordnete, jeweils mittels eines Elektromotors 12 angetriebene Drehteller 5a, 5b, 5c, 5d. Die Elektromotoren 12 werden bevorzugt durch eine gemäß den Ausführungen zu Fig. 1 bis Fig. 3 ausgeführte kontaktfreie Stromversorgung mit einem Versorgungsstrom gespeist. Die Drehteller 5a, 5b, 5c, 5d tragen wiederum eine Mehrzahl von vakuumbeaufschlagten Aufnahmemulden.

## Patentansprüche

1. Wendevorrichtung (60), insbesondere eine Wendetrommel (3), zum Wenden eines stabförmigen Artikels der Tabak verarbeitenden Industrie, insbesondere in einem Filteransetzer, umfassend einen rotierend antreibbaren Grundkörper (2) und mindestens einen an dem rotierbaren Grundkörper (2) angeordneten, mittels eines Elektromotors (12) angetriebenen Drehteller (5), **dadurch gekennzeichnet, dass** eine Leistungsübertragungseinrichtung (20) zur kontaktfreien Stromversorgung des Elektromotors (12) und einer zugeordneten elektronischen Steuereinheit (50) vorgesehen ist.

2. Wendevorrichtung (60) nach Anspruch 1, **dadurch gekennzeichnet, dass** die elektronische Steuereinheit (50) wenigstens einen, vorzugsweise vier Lageregler (15) und wenigstens einen, vorzugsweise vier Wechselrichter (19) umfasst.

3. Wendevorrichtung (60) nach einem der vorangehenden Ansprüche, **dadurch gekennzeichnet, dass** die Wendevorrichtung als eine Vorrichtung zum Fördern, Prüfen und/oder Bearbeiten eines stabförmigen Artikels der Tabak verarbeitenden Industrie ausgebildet ist, umfassend mindestens einen an dem rotierbaren Grundkörper (2) angeordneten elektrischen Verbraucher (4), wobei der mindestens eine elektrische Verbraucher (4) der Elektromotor (12) für den Drehteller (5) ist, der eine am rotierbaren Grundkörper (2) angeordnete und relativ zu diesem bewegbare Komponente ist, wobei die Leistungsübertragungseinrichtung (20) zur kontaktfreien Übertragung eines Versorgungsstroms ein ortsfestes Primärteil (21) und ein mit dem rotierbaren Grundkörper (2) verbundenes Sekundärteil (22) aufweist, und eine Signalübertragungseinrichtung (30) zur kontaktfreien Übertragung eines Signals zu oder von dem elektrischen Verbraucher (4) vorgesehen ist, wobei eine Modulationseinrichtung (34) zur Frequenzmodulation/-demodulation des kontaktfrei übertragenen Signals vorgesehen ist.

4. Wendevorrichtung (60) nach Anspruch 3, **dadurch gekennzeichnet, dass** der rotierbare Grundkörper (2) einen Gleichrichter (24) zum Gleichrichten des kontaktfrei übertragenen Versorgungsstroms aufweist.

5. Wendevorrichtung (60) nach Anspruch 3 oder 4, **dadurch gekennzeichnet, dass** das Primärteil (21) und das Sekundärteil (22) der Leistungsübertragungseinrichtung (20) jeweils eine kreisringförmige Induktionswicklung aufweisen.

6. Wendevorrichtung (60) nach einem der Ansprüche 3 bis 5, **dadurch gekennzeichnet, dass** die Signalübertragungseinrichtung (30) ein ortsfestes Primärteil (31) und ein mit dem rotierbaren Grundkörper (2) verbundenes Sekundärteil (32) aufweist, wobei das Primärteil (31) und das Sekundärteil (32) jeweils eine kreisringförmige Induktionswicklung aufweisen.

7. Wendevorrichtung (60) nach einem der Ansprüche 3 bis 6, **dadurch gekennzeichnet, dass** die Signalübertragungseinrichtung (30) konzentrisch und radial innerhalb der Leistungsübertragungseinrichtung (20) angeordnet ist.

8. Wendevorrichtung (60) nach einem der Anspruch 3 bis 7, **dadurch gekennzeichnet, dass** die Signalübertragungseinrichtung (30) zur kontaktfreien Signalübertragung einen Kondensator (33) mit einer ortsfesten Kondensatorelektrode (39) und einer mit dem rotierbaren Grundkörper (2) verbundenen Kondensatorelektrode (39) aufweist, welche bevorzugt kreisringförmig ausgebildet sind.

9. Wendevorrichtung (60) nach einem der Anspruch 3 bis 8, **dadurch gekennzeichnet, dass** die Signalübertragungseinrichtung (30) zur kontaktfreien Signalübertragung eine Kondensatoreinheit mit zwei ortsfesten Kondensatorelektroden aufweist, welche kreisringförmig ausgebildet und konzentrisch zueinander angeordnet sind und zwei mit dem rotierbaren Grundkörper (2) verbundenen Kondensatorelektroden aufweist, welche kreisringförmig ausgebildet und konzentrisch zueinander angeordnet sind.

10. Wendevorrichtung (60) nach Anspruch 9, **dadurch gekennzeichnet, dass** die zwei ortsfesten konzentrisch zueinander angeordneten Kondensatorelektroden und die zwei mit dem rotierbaren Grundkörper (2) verbundenen konzentrisch zueinander angeordneten Kondensatorelektroden für einen Vollduplexbetrieb ausgebildet und eingerichtet sind, sodass Daten in beide Richtungen gleichzeitig übertragbar sind.

11. Wendevorrichtung (60) nach Anspruch 3, **dadurch gekennzeichnet, dass** die Leistungsübertragungseinrichtung (20) zur kontaktfreien Stromversorgung als ein Generator (25) mit einem Rotor (26) und einem Stator (27) ausgebildet ist, wobei der Stator (27) an dem rotierbaren Grundkörper (2) ausgebildet ist, und wobei der Stator (27) eine Mehrzahl von Wicklungen aufweist.

12. Wendevorrichtung (60) nach Anspruch 11, **dadurch gekennzeichnet, dass** der Stator (27) unabhängig vom Rotor (26) antreibbar ist.

13. Wendevorrichtung (60) nach einem der Ansprüche 3 bis 10, **dadurch gekennzeichnet, dass** die Leistungsübertragungseinrichtung (20) zur Erzeugung eines induktiven Wechselfelds mit einer Frequenz von mindestens 10 kHz, vorzugsweise mindestens 20kHz, insbesondere 50kHz oder mehr eingerichtet ist.

14. Wendevorrichtung (60) nach einem der Ansprüche 3 bis 13, **dadurch gekennzeichnet, dass** der Elektromotor (12) als Servomotor, Torquemotor oder Schrittmotor ausgebildet ist.

15. Wendevorrichtung (60) nach einem der Ansprüche 3 bis 14, **dadurch gekennzeichnet, dass** ein Drehwinkelgeber (35) und/oder wenigstens einen Indexsensor (16, 16a, 16b) zur Ermittlung einer Winkelposition und/oder -geschwindigkeit des Grundkörpers (2) vorgesehen ist.

16. Wendevorrichtung (60) nach einem der Ansprüche 3 bis 15, **dadurch gekennzeichnet, dass** an oder in dem Grundkörper (2) die elektronische Steuereinheit (50) zum Steuern und/oder Regeln der Drehgeschwindigkeit und der Lage des mindestens einen Elektromotors (12) vorgesehen ist.

## Claims

1. Turning apparatus (60), in particular a turning drum (3), for turning a rod-shaped article for the tobacco-processing industry, in particular in a filter applicator, comprising a rotatably drivable main body (2) and at least one rotary plate (5) arranged on the rotatable main body (2) and driven by means of an electric motor (12), **characterised in that** a power transmission device (20) is provided for contactless power supply to the electric motor (12) and an associated electronic control unit (50).

2. Turning apparatus (60) according to claim 1, **characterised in that** the electronic control unit (50) comprises at least one, preferably four, position controllers (15) and at least one, preferably four, inverters (19).

3. Turning apparatus (60) according to either of the preceding claims, **characterised in that** the turning apparatus is designed as an apparatus for conveying, inspecting and/or processing a rod-shaped article for the tobacco-processing industry, comprising at least one electric load (4) arranged on the rotatable main body (2), the at least one electric load (4) being the electric motor (12) for the rotary plate (5), which is a component that is arranged on the rotatable main body (2) and can be moved relative thereto, the power transmission device (20) for contactless transmission of a supply current having a stationary primary part (21) and a secondary part (22) that is connected to the rotatable main body (2), and a signal transmission device (30) being provided for contactless transmission of a signal to or from the electric load (4), a modulation device (34) being provided for frequency modulation/demodulation of the contactlessly transmitted signal.

4. Turning apparatus (60) according to claim 3, **characterised in that** the rotatable main body (2) has a rectifier (24) for rectifying the contactlessly transmitted supply current.

5. Turning apparatus (60) according to either claim 3 or claim 4, **characterised in that** the primary part (21) and the secondary part (22) of the power transmission device (20) each have an annular induction coil.

6. Turning apparatus (60) according to any of claims 3 to 5, **characterised in that** the signal transmission device (30) has a stationary primary part (31) and a secondary part (32) that is connected to the rotatable main body (2), the primary part (31) and the secondary part (32) each having an annular induction coil.

7. Turning apparatus (60) according to any of claims 3 to 6, **characterised in that** the signal transmission device (30) is arranged concentrically and radially inside the power transmission device (20).

8. Turning apparatus (60) according to any of claims 3 to 7, **characterised in that** the signal transmission device (30) for contactless signal transmission has a capacitor (33) comprising a stationary capacitor electrode (39) and a capacitor electrode (39) that is connected to the rotatable main body (2), which electrodes are preferably annular.

9. Turning apparatus (60) according to any of claims 3 to 8, **characterised in that** the signal transmission device (30) for contactless signal transmission has a capacitor unit comprising two stationary capacitor electrodes which are annular and arranged mutually concentrically, and two capacitor electrodes that are connected to the rotatable main body (2) and are annular and arranged mutually concentrically.

10. Turning apparatus (60) according to claim 9, **characterised in that** the two stationary capacitor electrodes that are arranged mutually concentrically and the two capacitor electrodes that are connected to the rotatable main body (2) and are arranged mutually concentrically are designed for a full-duplex mode and are configured such that data can be transmitted simultaneously in both directions.

11. Turning apparatus (60) according to claim 3, **characterised in that** the power transmission device (20) for contactless power supply is designed as a generator (25) comprising a rotor (26) and a stator (27), the stator (27) being formed on the rotatable main body (2), and the stator (27) having a plurality of windings.

12. Turning apparatus (60) according to claim 11, **characterised in that** the stator (27) can be driven independently of the rotor (26).

13. Turning apparatus (60) according to any of claims 3 to 10, **characterised in that** the power transmission device (20) is configured to generate an inductive alternating field having a frequency of at least 10 kHz, preferably at least 20 kHz, in particular 50 kHz or more.

14. Turning apparatus (60) according to any of claims 3 to 13, **characterised in that** the electric motor (12) is designed as a servomotor, torque motor or stepper motor.

15. Turning apparatus (60) according to any of claims 3 to 14, **characterised in that** a rotational angle sensor (35) and/or at least one index sensor (16, 16a, 16b) is provided for determining an angular position and/or speed of the main body (2).

16. Turning apparatus (60) according to any of claims 3 to 15, **characterised in that** the electronic control unit (50) for controlling, in an open-loop and/or closed-loop manner, the rotational speed and the position of the at least one electric motor (12) is provided on or in the main body (2).

## Revendications

1. Dispositif de retournement (60), en particulier tambour de retournement (3), destiné à retourner un article en forme de tige de l'industrie de traitement de tabac, en particulier dans un mécanisme de fixation de filtre, comprenant un corps de base (2) pouvant être entraîné en rotation et au moins un plateau tournant (5) disposé sur le corps de base (2) rotatif et entraîné au moyen d'un moteur électrique (12), **caractérisé en ce qu'**un moyen de transmission de puissance (20) est prévu pour l'alimentation électrique sans contact du moteur électrique (12) et d'une unité de commande électronique (50) associée.

2. Dispositif de retournement (60) selon la revendication 1, **caractérisé en ce que** l'unité de commande électronique (50) comprend au moins un, de préférence quatre régulateurs de position (15) et au moins un, de préférence quatre onduleurs (19).

3. Dispositif de retournement (60) selon l'une des revendications précédentes, **caractérisé en ce que** le dispositif de retournement est réalisé sous la forme d'un dispositif destiné à acheminer, vérifier et/ou traiter un article en forme de tige de l'industrie de traitement de tabac, comprenant au moins un consommateur électrique (4) disposé sur le corps de base (2) rotatif, l'au moins un consommateur électrique (4) étant le moteur électrique (12) pour le plateau tournant (5), qui est un composant disposé sur le corps de base (2) rotatif et mobile par rapport à celui-ci, le moyen de transmission de puissance (20) pour la transmission sans contact d'un courant d'alimentation comportant une partie primaire (21) fixe et une partie secondaire (22) reliée au corps de base (2) rotatif, et un moyen de transmission de signal (30) étant prévu pour transmettre sans contact un signal vers le consommateur électrique (4) ou en provenance de celui-ci, un moyen de modulation (34) étant prévu pour la modulation/démodulation de fréquence du signal transmis sans contact.

4. Dispositif de retournement (60) selon la revendication 3, **caractérisé en ce que** le corps de base (2) rotatif comporte un redresseur (24) pour redresser le courant d'alimentation transmis sans contact.

5. Dispositif de retournement (60) selon la revendication 3 ou 4, **caractérisé en ce que** la partie primaire (21) et la partie secondaire (22) du moyen de transmission de puissance (20) comportent respectivement un enroulement inducteur en forme de couronne circulaire.

6. Dispositif de retournement (60) selon l'une des revendications 3 à 5, **caractérisé en ce que** le moyen de transmission de signal (30) comporte une partie primaire (31) fixe et une partie secondaire (32) reliée au corps de base (2) rotatif, la partie primaire (31) et la partie secondaire (32) comportant respectivement un enroulement inducteur en forme de couronne circulaire.

7. Dispositif de retournement (60) selon l'une des revendications 3 à 6, **caractérisé en ce que** le moyen de transmission de signal (30) est disposé de manière concentrique et radiale à l'intérieur du dispositif de transmission de puissance (20).

8. Dispositif de retournement (60) selon l'une des revendications 3 à 7, **caractérisé en ce que** le moyen de transmission de signal (30) pour la transmission de signal sans contact comporte un condensateur (33) doté d'une électrode de condensateur (39) fixe et une électrode de condensateur (39) reliée au corps de base (2) rotatif, qui est de préférence réalisée en forme de couronne circulaire.

9. Dispositif de retournement (60) selon l'une des revendications 3 à 8, **caractérisé en ce que** le moyen de transmission de signal (30) pour la transmission de signal sans contact comporte une unité de condensateurs comprenant deux électrodes de condensateur fixes, qui sont réalisées en forme de couronne circulaire et disposées de manière concentrique l'une par rapport à l'autre, et comprenant deux électrodes de condensateur reliées au corps de base (2) rotatif, qui sont réalisées en forme de couronne circulaire et disposées de manière concentrique l'une par rapport à l'autre.

10. Dispositif de retournement (60) selon la revendication 9, **caractérisé en ce que** les deux électrodes de condensateur fixes disposées de manière concentrique l'une par rapport à l'autre et les deux électrodes de condensateur reliées au corps de base (2) rotatif et disposées de manière concentrique l'une par rapport à l'autre sont conçues et configurées pour un fonctionnement en full-duplex, de telle sorte que des données peuvent être transmises simultanément dans les deux directions.

11. Dispositif de retournement (60) selon la revendication 3, **caractérisé en ce que** le moyen de transmission de puissance (20) pour l'alimentation électrique sans contact est réalisé sous la forme d'un générateur (25) doté d'un rotor (26) et d'un stator (27), le stator (27) étant réalisé sur le corps de base (2) rotatif, et le stator (27) comportant une pluralité d'enroulements.

12. Dispositif de retournement (60) selon la revendication 11, **caractérisé en ce que** le stator (27) peut être entraîné indépendamment du rotor (26).

13. Dispositif de retournement (60) selon l'une des revendications 3 à 10, **caractérisé en ce que** le moyen de transmission de puissance (20) est conçu pour générer un champ alternatif inductif avec une fréquence d'au moins 10 kHz, de préférence au moins 20 kHz, en particulier 50 kHz ou plus.

14. Dispositif de retournement (60) selon l'une des revendications 3 à 13, **caractérisé en ce que** le moteur électrique (12) est réalisé sous la forme d'un servomoteur, d'un moteur couple ou d'un moteur pas à pas.

15. Dispositif de retournement (60) selon l'une des revendications 3 à 14, **caractérisé en ce qu'**un codeur rotatif (35) et/ou au moins un capteur d'index (16, 16a, 16b) est prévu pour déterminer une position angulaire et/ou une vitesse angulaire du corps de base (2).

16. Dispositif de retournement (60) selon l'une des revendications 3 à 15, **caractérisé en ce que** l'unité de commande électronique (50) est prévue sur ou dans le corps de base (2) pour commander et/ou réguler la vitesse de rotation et la position de l'au moins un moteur électrique (12).
